# EUROPEAN PATENT APPLICATION

(11) **EP 1 804 177 A1**
(43) Date of publication of application: **04.07.2007**
(21) Application number: 06025741.7
(22) Date of filing: 12.12.2006
(51) Int. Cl.: G06F 17/30

(54) **Merge tool for structured object models**

(30) Priority: 30.12.2005 US 322798
(71) Applicant: SAP AG, 69190 Walldorf (DE)
(72) Inventor: Brueggemann, Thomas, 68165 Mannheim (DE); Jesse, Stefan, 69242 Muehlhausen (DE); Lauterbach, Johannes, 69121 Heidelberg (DE)
(74) Representative: Müller-Boré & Partner Patentanwälte

(57) **Abstract**

An object-based merge tool for structured object models encapsulates data in files, such as metadata in XML files, as model objects in accordance with an underlying model, all of which can be graphically represented to a user. The model objects may be formed in any structure, such as a tree structure, which makes the semantical structure of the files understandable to the user. Graphical representation of files also allows the user to see how the files have been changed. The differences between files or file sets can be graphically represented to the user, such as through markings of the model objects in the tree structure, and the differences can be explained in an additional view. Related apparatus, computer program products and computer systems are also described.

## Description

### BACKGROUND

The subject matter described herein relates to object-based merge tools for handling merge scenarios.

Extensible mark-up language (XML) files that contain metamodel-based metadata often require special treatment during merge scenarios, which typically occur during team development scenarios (e.g., check-in conflicts) or during upgrades of modified systems (e.g., integration conflicts). A check-in conflict may exist when two users work on a file or file set separately, then check-in their changed or unchanged versions into, e.g., a data transaction register (DTR) versioning system. The merging of these two versions of the original (or ancestor) file or file set creates a check-in conflict. An integration conflict may exist when a file or file set is released, but further development of the file or file set occur internally for the next release, while the file or file set that was released is modified. Then the next release of the file or file set occurs. In this case, the merging of these two different releases is simply an upgrade of a modified system and creates an integration conflict. In particular, the upgrade of modified systems on the customer side generally requires comprehensive tool support to reduce the complexity of the merge scenario and to help rule out inconsistencies caused during the merge operation.

Existing merge tools are text-based, which when used with XML files, are difficult to use and are not useful to prevent inconsistencies during a merge scenario. That is, existing merge tools are generally only capable of providing a textual representation of the differences in the metadata between XML files, which generally requires a user to still read the content of the XML file to determine the differences. Existing merge tools also do not provide any connection to a meta-model and/or to a versioning system.

### SUMMARY

The present inventors recognized that existing merge tools are text-based, which when used with XML files, are difficult to use and are not useful to prevent inconsistencies during a merge operation and do not provide any connection to a meta-model and/or to a versioning system. Consequently, the present inventors developed the subject matter described herein, e.g., an object-based merge tool, that is intuitive and easy to use. The object-based merge tool encapsulates metadata in XML files as model objects in accordance with an underlying metamodel, all of which can be graphically represented to the user. The model objects may be formed in a tree structure (or any other structure), which makes the semantical structure of the XML files clear to the user and easily understandable by the user. Additionally, with the graphical representation of the XML files (with their metamodel and model objects formed in a tree structure, for example), a user is able to see how the files have been changed. The differences between XML files or file sets can be graphically represented to the user, such as through markings of the model objects in the tree structure, and the differences can be explained in an additional view.

In one aspect, model objects to represent metadata of a selected file may be obtained. Optionally, attributes, such as a property and a value pair, may be assigned to each obtained model object. Each obtained model object may be associated with a corresponding tree node. Then the associated tree nodes may be displayed in a tree structure. Optionally, any one of the displayed tree nodes my be selected. Thereafter, attributes and associated values assigned to the model object associated with the selected tree node may be displayed.

In one variation, the displayed tree nodes are configured to represent metadata and/or relations between obtained model objects. Also, the displayed tree nodes may be collapsible or expandable so hide or show the tree nodes or model objects that are attached directly beneath the collapsible or expandable tree node.

In an interrelated aspect, a first model of a first file, a second model of a second file and a third model of a third file may be obtained. Thereafter, one or more differences between the first model and the third model and one or more differences between the second model and the third model may be determined. The first model and second model and at least one determined difference may then be displayed.

In one variation a first tree containing hierarchically arranged model objects of the first model and a second tree containing hierarchically arranged model objects of the second model may be displayed. Additionally, at least one of the determined differences may be displayed and graphically visualized by a decorator, a shape or a link or a combination of these graphical markings. Optionally, the hierarchically arranged model objects may represent a metadata of the first file and second file and correspond to one of the tree nodes. Thereafter, the tree nodes may be arranged corresponding to a structure of the metadata of the first file and second file. The arranged tree nodes may be displayed in a tree structure.

Computer program products, which may be embodied on computer readable-material, are also described. Such computer program products may include executable instructions that cause a computer system to conduct one or more of the method acts described herein.

Similarly, computer systems are also described that may include a processor and a memory coupled to the processor. The memory may encode one or more programs that cause the processor to perform one or more of the method acts described herein.

The subject matter described herein may provide one or more of the following advantages. The object-based merge tool provides an abstract and graphical view of the metadata of XML files or file sets to provide a better and more intuitive presentation of the differences between XML files. This view will aid in resolving the differences (i.e. conflict resolution) during team development (i.e., concurrent work on the same application metadata) and upgrades to modified systems. Furthermore, the object-based merge tool can support two-way and three-way merge scenarios and interact with a DTR versioning system.

The details of one or more implementations are set forth in the accompanying drawings and the description below. Other features and advantages will be apparent from the description and drawings, and from the claims.

### DESCRIPTION OF DRAWINGS

FIG. 1 is a flow diagram depicting a process for graphically representing a file containing metadata.

FIG. 2 is a flow diagram depicting an interrelated process for graphically representing a file containing metadata.

FIG. 3 depicts an example of a graphical user interface that can result from the processes of FIGS. 1 and 2.

FIG. 4 is a flow diagram depicting a process for graphically representing differences between the content of files containing metadata for use during a merge process

FIG. 5 is a flow diagram depicting a process for merging files containing metadata.

FIG. 6 depicts a graphical user interface of a merge tool frame work that can be used to merge files or file sets containing metadata.

FIG. 7 is a block diagram of the architecture of a merge tool framework that can be used to merge files or file sets containing metadata.

Like reference symbols in the various drawings indicate like elements.

### DETAILED DESCRIPTION

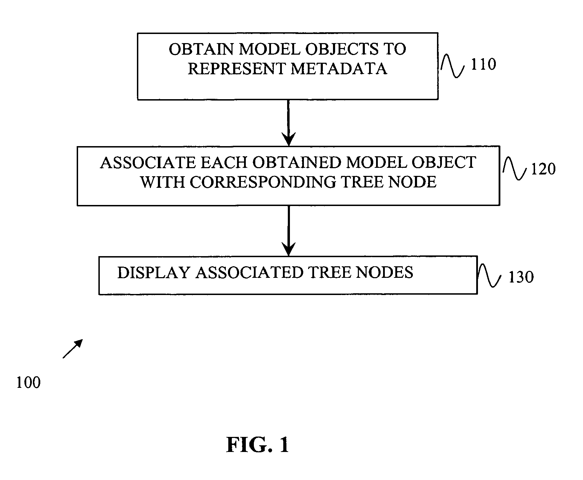

FIG. 1 is a flow diagram depicting an implementation of a process 100 for graphically representing a file (or file set) containing model-based metadata. The file may be, for example, a picture, diagram, text document or programming code, and may contain data other than model-based metadata. As used herein, a model may be considered any structure of model objects (or entities) of information, which may be arbitrarily connected. The model, in this implementation, results from the content of the file (or file set), such as the metadata, and the file (or file set) may be retrieved from a DTR or local hard disk.

With continued reference to FIG. 1, at 110, model objects to represent metadata are obtained. In this implementation, there is a root model object that all other model objects can be reachable from. Furthermore, each model object may have a set of property-value pairs assigned The set of properties (or attributes) may include, for example, type, codebody, and visibility, or any other suitable properties needed to represent the metadata associated with the model object. The value assigned to a particular property may be user-defined. For example, the value assigned to the property named "visibility" may be "public" or "private". At 120, each model object is associated with a corresponding tree node. At 130, the tree nodes are displayed so that the content of the file is graphically represented as a tree structure. As such, the result of process 100 is a semantical structure of the file content, which is clear and easily understandable to a user compared to reading the contents of the file directly to determine the content structure of the file.

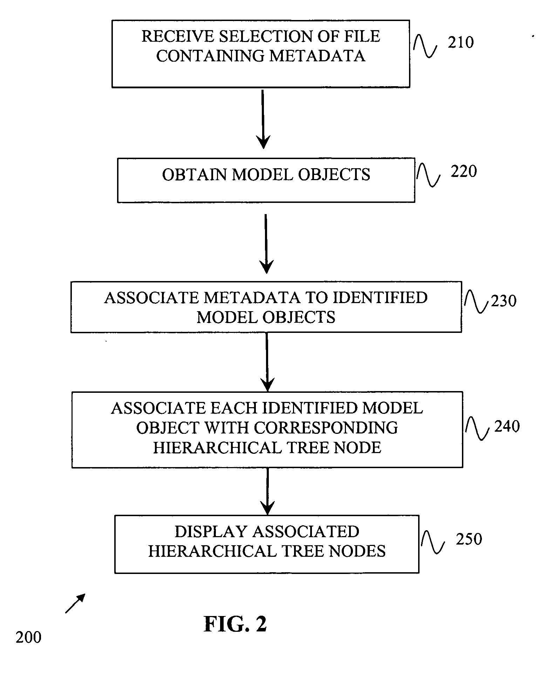

FIG. 2 is a flow diagram depicting an interrelated implementation of a process 200 for graphically representing the content of a file containing metadata. At 210, a selection of a file, such as a computer file or program code, containing metadata is received. At 220, model objects are obtained. As above, there is a root model object that all other model objects can be reachable from. Moreover, each model object may have a set of property-value pairs assigned Thereafter, at 230, the metadata of the selected file is associated with the obtained model objects. At 240, each model object is associated with a corresponding hierarchical tree node. At 250, the hierarchical tree nodes are displayed, e.g., in a tree structure. As with FIG. 1, the process 200 permits a user to easily understand the semantical structure of the file contents since the content is represented in a tree structure.

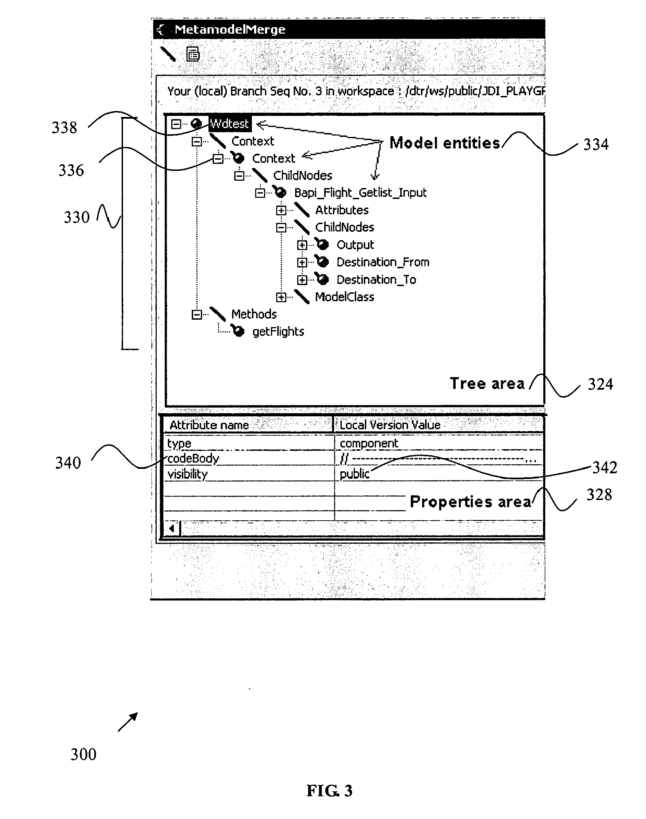

FIG. 3 depicts an example of a graphical user interface 300 that can result from the processes of FIGS. 1 and 2. The graphical user interface 300 includes a tree area 324 and a properties area 328. The tree area 324 provides a graphical representation of a model 330. In this case, the model 330 is a tree structure of model objects 334 that represents exactly an underlying file. Each model object 334 occurs as a tree node 336. Relationships between model objects occur as tree nodes, as well. A tree node 336 is an atomic unit of visualization and each tree node 336 holds at least one model object 334. The model objects 334 include a root model object 338, e.g., Wdtest, that all the other model objects 334 can reach. A selected model object, such as Wdtest, may be framed or highlighted to indicate its selection. The properties area 328 includes the properties (attributes) 340 and values 342 of the selected model object (Wdtest). Here the selected model object has attributes 340 of type, codeBody and visibility. The values 342 include, e.g., component and public. For example, the attribute "type" has a value of "component."

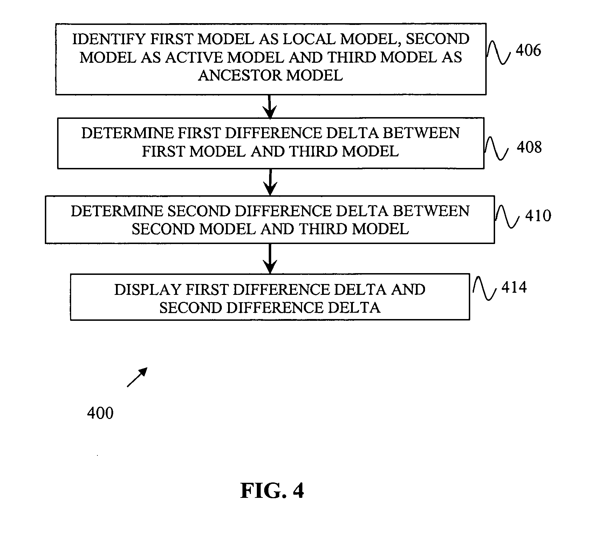

FIG. 4 is a flow diagram depicting an implementation of a process 400 for graphically representing differences between the content of files (or file sets) containing, for example, metadata for use during a merge process. Generally, three models are utilized to determine and represent the differences between the content of files containing metadata, although fewer or more models may be utilized. Each of the models result from the content of a file (or file set), such as metadata. The file or file set may be retrieved from a DTR versioning system or local hard disk.

The models may include a left model, a right model and an ancestor model. In a check-in conflict scenario, for example, the left model may be called "local" and the right model may be called "active". The left (or local) and right (or active) models may be considered concurrent models because either may be designated the active model. The ancestor model is generally the latest common ancestor of the concurrent models.

The result of a comparison between models may be referred to as difference deltas. Each difference delta concerns a model object of one or both of the compared models. The difference deltas may be classified as applicable (or not), and if classified as applicable whether to be automatically applied (i.e., mergeable). Applicable deltas also may be classified by the way they behave when being applied.

If, for example, two models, such as the left (local) model and the ancestor model, are compared to determine the differences between them and the result of the comparison is determined to be to be applicable, then when each difference delta of the result is applied, the model object corresponding to the difference delta in both the left (local) model and the right (active) model are made equal by changing the model object in the left (local) model, which contains the result of the merge.

The difference deltas that are not applicable may be referred to as pseudo difference deltas, which may occur, e.g., where a difference between the ancestor model and the left (local) model is the same as a difference between the ancestor model and the right (active) model. For example, such a difference may occur where a model object X has been added in the left (local) model beneath a model object Y and the same addition occurred in the right (active) model. As such, there is actually no difference between the concurrent models with respect to the model object X beneath the model object Y. But since it typically is important for a user to know that the same change occurred in both models, the user may be made aware of this fact by graphically highlighting the same change to both models.

As noted above, applicable difference deltas may be classified as automatically applied (i.e., mergeable) or not, and if not, then the user needs to determine interactively whether to apply or merge the difference delta during the merge process. An automatically applied (or mergeable) difference delta may result where a concurrent difference delta results from a difference between the ancestor model and only one of the concurrent models (i.e., not both of them) without any conflict with difference deltas between the ancestor model and the other concurrent model. Thus, if an automatically applicable difference delta occurred in the right (active) model, then the delta will be applied, but if the automatically applicable difference delta occurred in the left (local) model, then the delta will not be applied. A set of settings controlling the specific properties of a difference delta, e.g., whether to be automatically applied (or mergeable) may be provided to the user. These settings can set by the user on, e.g., a preference page.

Difference deltas that are not automatically applicable (or mergeable) can occur where, e.g., a model object X is deleted on one model (e.g., the left model), while only a property of the model object X was changed on the other model (e.g., the right model). In this case, there is a conflict between the concurrent difference deltas as they both concern the same model object (i.e., model object X). Thus, for such difference deltas, the user needs to interactively decide during the merge process whether or not to accept the difference delta.

During the merge process, the difference deltas may be graphically represented or visualized differently in a graphical user interface, such as in a conflict viewer and/or in a properties area. For example, a color, style and icon may be used to visually distinguish each class of difference deltas.

As noted above, applicable difference deltas may also be classified by the way they behave when being applied, such as positive deltas, negative deltas, exchange deltas, property deltas and reordering deltas. Positive deltas occur when the right (active) model has an additional model object that does not exist at the corresponding location in the left (local) model. If this type of delta is applied, the positive delta will insert this additional model object into the corresponding location in the left (local) model. The model object to be inserted may be graphically or visually marked to indicate to the user the difference. If the positive delta is applied, then the model object exists in both models (i.e., the left model and the right model). In this case, the model object may be marked in both models and may be connected via a link.

Negative deltas can occur when the left (local) model has a model object that is missing at the corresponding location in the right (active) model. If this type of delta is applied, the negative delta will delete this model object in the left (local) model. The model object to be deleted may be graphically or visually marked to indicate to the user the difference. If the negative delta is applied, then the model object is deleted from the left (local) model, so it will no longer be visible to the user.

Exchange deltas can occur when the right (active) model has a model object that is different than the model object in the corresponding location in the left (local) model. If this type of delta is applied, the exchange delta will exchange the model object in the left (local) model with the model object in the corresponding location in the right (active) model. The model object to be exchanged exists in the left (local) model and the exchanging model object exists in the right (active) model. Both of these model objects may be graphically marked and connected via a link.

Property deltas can occur when the value of a property of a model object is different between the left (local) and right (active) models. If this type of delta is applied, the property delta will change the property in the left (local) model by copying the value from the right (active) model to the left (local) model. These model objects may be marked and connected via a link.

Reordering deltas can occur when the order of model objects is different between the left and right models. If this type of delta is applied, the reordering delta will change the order of the model objects by copying the order of the model objects in the right (active) model to the left (local) model. The model objects involved may be marked and connected via a link.

As seen in FIG. 4, the process 400 for graphically representing the difference deltas between the models, starts at 406, where a first model, a second model and a third model are identified as a local model, an active model and an ancestor model, respectively. As mentioned previously, the ancestor model is typically the latest common ancestor of the concurrent models, in this case the first model and the second model. At 408, the difference delta between the first (local) model and the third (ancestor) model is determined. Likewise, at 410, the difference delta between the second (active) model and the third (ancestor) model is determined. As described previously, the difference deltas can include pseudo difference deltas, automatically applicable (or mergeable) difference deltas and applicable (or mergeable) difference delta that are not automatically applicable. Also, noted above, applicable difference deltas may include positive deltas, negative deltas, exchange deltas, property deltas and reordering deltas. Next, at 414, the difference deltas are displayed, e.g., by graphically representing each difference delta in a graphical user interface, such as in a conflict viewer (e.g., a tree area) and/or in a properties area. For example, a color, style and icon may be used to visually distinguish each type (or class) of difference deltas.

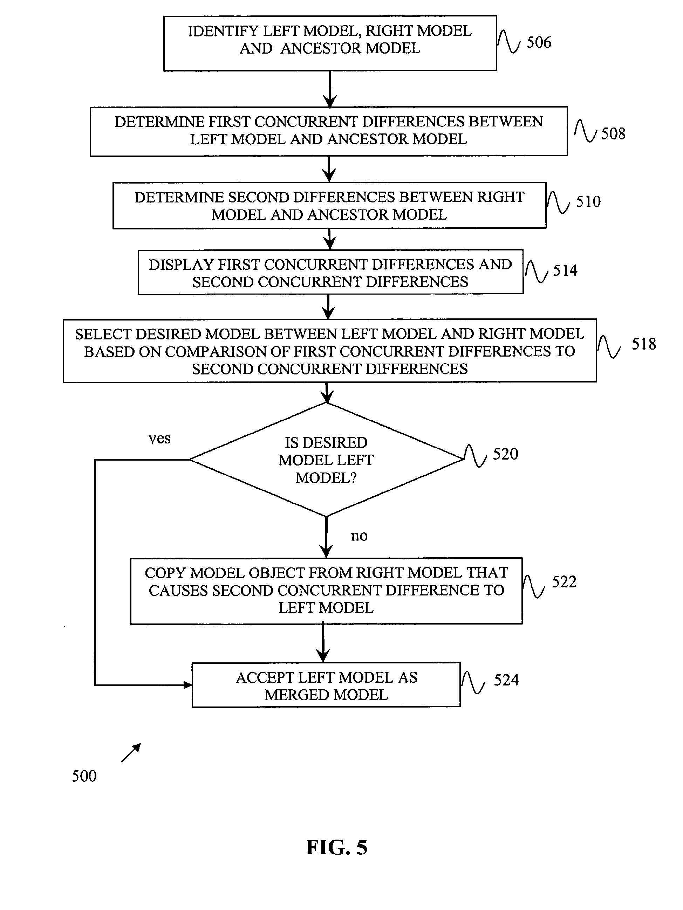

FIG. 5 is a flow diagram depicting an implementation of a process 500 for merging files containing metadata. As with FIG. 4, three models are utilized-- a left model, a right model and an ancestor model. Each of the models result from the content of a file (or file set), which may be retrieved from a DTR versioning system or local hard disk. In the process 500, at 506, a left model, a right model and an ancestor model are identified.

As noted above, if any two models are compared, then the result is a set of difference deltas in each of the two compared models. The difference deltas between each of the concurrent model (left and right model) and the ancestor model, referred to as concurrent differences, are used to create a merged model that is the result of the merge process. Thus, at 508, the concurrent differences between the left model and the ancestor model are determined, and at 510, the concurrent differences between the right model and the ancestor model are determined.

Then, at 514, the concurrent differences are displayed, e.g., by graphically representing each difference delta in a graphical user interface, such as in a conflict viewer (e.g., a tree area) and/or in a properties area. A color, a style and an icon may be used to visually distinguish each type (or class) of current differences.

In the merge process described herein, the left (or local) model will be the merged model at the end of the process, but in other implementations of the merge process the right model may be the merged model. The left model is changeable because it may be persisted in a file or files on the local hard disk rather than in a remote file or remote files in the DTR. The differences between the ancestor model and each of the concurrent models depict how the concurrent differences originated and also help to explain each concurrent difference. Thus, at 518, based on the displayed current differences, a user can select either the left model or the right model as the desired model. At 520, if, based on the concurrent difference, the left (or local) model is the desired model, then, because the left model by default is the merged model, nothing remains to be done, and the difference may be considered resolved and the process proceeds to 524. On the other hand, at 520, if, based on the concurrent difference, the left model is not the desired model (i.e., at 518 the right model was selected as the desired model), then, at 522, that portion of the right model that causes the concurrent difference is copied to the left model so that there is no actual difference anymore. Once the copying is complete, the difference may be considered resolved and the process proceeds to 524. At 524, the left model is accepted as the merged model.

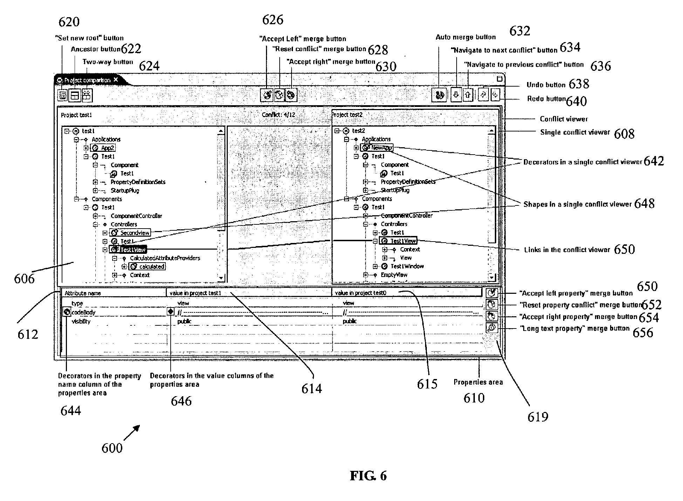

FIG. 6 depicts a graphical user interface 600 of a merge tool frame work that can be used to merge files or file sets containing, for example, metadata. The graphical user interface 600 includes a left conflict viewer 606 and a right conflict viewer 608, both of which are used to visualize associated models. The left conflict viewer 606 is associated with a left (local) model. The right conflict viewer 608 is associated with a right (active) model. The graphical user interface 600 may also have a top conflict viewer (not shown), which may be associated with an ancestor model. As described above, the left (local) model, the right (active) model, and the ancestor model display the contents of files or file sets using model objects formed in a tree structure that can result from the process of FIGS. 1 and 2 and graphically depicted in FIG. 3. The concurrent differences or difference deltas between the left model and ancestor model and the right model and the ancestor model can be determined and displayed according to a process such as the one described with reference to FIG. 4.

The graphical user interface 600 also includes a properties area 610 for displaying all properties of a currently selected node and associated model object, which in this case is "Test1View". The properties area 610 may include an attribute(or property) name column 612, a first value column 614, which can be associated with the left (local) model), a second value column 616, which can be associated with the right (active) model, and a third value column (not shown), which can be associated with an ancestor model.

With continued reference to FIG. 6, the difference deltas (or concurrent differences) may be visually distinguished by first decorators 642, second decorators 644, third decorators 646, shapes 648 and links 650. The first decorators 642 occur in the conflict viewers 606, 608. The first decorators 642 occur at tree nodes and show that the model content these nodes are associated with has been changed with respect to the corresponding node of the ancestor model. Different types of first decorators 642 show whether a node has been added or the content of a node has been exchanged or if property values have been changed The first decorators 642 correspond to the third decorators 646, which may occur in the value columns 614, 615 of the properties area 610. The third decorators 646 in the value columns show that the value of the associated property in the selected node has been changed with respect to the value of the same property in the corresponding node of the ancestor model.

The second decorators 644 may occur in the property name column 612 of the properties area 610. The second decorators 644 denote a difference delta of the current property displayed, which in this case is "codeBody". The second decorators 644 correspond to shapes 648 and links 650. The shapes 658 are visualizations of a difference delta concerning only one node in one conflict viewer, e.g., either the left conflict viewer 606 or the right conflict viewer 608. The links 650 are visualizations of the connection between two shapes, one for a node in the left conflict viewer 606 and one for a node in the right conflict viewer. All difference deltas concerning a node in the left conflict viewer 606 and a node in the right conflict viewer 608 can be visualized by two shapes 648 for the nodes and a link 650 between them.

The graphical user interface 600 also includes a top line tool bar 618 that contains, for example, toggle buttons, such as a "set new root" button 620, an ancestor button 622, a two-way button 624, an "accept left" merge button 626, a "reset conflict" merge button 628, an "accept right" merge button 630, an "auto merge" button 632, a "navigate to next conflict" button 634, a "navigate to previous conflict" button 636, an undo button 638, and a redo button 640. The "set new root" button 620 can be used for tree structured models and associated with an action to set an inner node of each tree in the left model and the right model (and ancestor model) as a new root for all trees in order to view a part of the model instead of the entire model. The ancestor button 622 can be used to show and hide the top conflict viewer (not shown) with the ancestor model. If the ancestor button 622 is activated, e.g., my moving a cursor over the button with in input device such as a mouse and clicking the left mouse button, then the top conflict viewer and associated ancestor model are shown above the left conflict viewer 606 and the right conflict viewer 608. Moreover, the third value column 616 is shown in the properties area 610 if the button 620 is activated. The two-way button 624 can be used to switch to a two-way merge mode. In this mode, the common ancestor is not shown and can not be shown. The properties area 610 will show only the first value column 614 and the second value column 615, and decorators 642, 646, 648 are not displayed.

The "accept left" merge button 626 can be used to resolve a current conflict, i.e., there is a difference delta associated with a tree node/model object. As described above with reference to FIG. 5, a conflict may be resolved by accepting the left model object of the currently selected node. As the left model is the result model, nothing is changed. Similarly, the "accept right" merge button 630 can be used to resolve the current conflict. This resolution of the current conflict can be accomplished by accepting the right model object of the currently selected node. As the left model is the result model, the right model element is copied into the left model. The "reset conflict" merge button 628 can be used to un-resolve the current conflict. As the left model is the result model, the original content of the node in the left model is restored if necessary.

The auto merge button 632 can be used to perform a specific action for all auto-mergeable deltas. The "navigate to next conflict" button 634 can be used to navigate to the next conflict of interest in a forward direction. Similarly, the "navigate to previous conflict" button 636 can be used to navigate to the next conflict of interest in a backward direction. A user can set up a preference page specifying whether all difference deltas are navigated, whether only applicable difference deltas are navigated, or whether the difference deltas requiring user interaction are navigated. The undo button 638 can be used for undoing the last merge action, while the redo button 640 can be used for redoing the last merge action.

The graphical user interface 600 also includes a properties tool bar 619 that contains, for example, an "accept left property" merge button 650, a "reset property conflict" merge button" 652, an "accept right property" merge button 654, and a "Long text property" merge button 656. The "accept left property" merge button 650 can be used to resolve the current property conflict, which can be done by accepting the left value of this property of the currently selected node. As the left model is the result model, nothing is changed. Similarly, the "accept right property" merge button 654 can be used to resolve the current property conflict, which can be done by accepting the right value of this property of the currently selected node. As the left model is the result model, the value of the property of the right model object is copied into the left model object. The "reset property conflict" merge button 652 can be used to un-resolve the currently selected property conflict. As the left model is the result model, the original value of the property on the left side is restored if necessary. The "long text property" merge button 656 can be used to open a modal dialog, perform a textual merge with arbitrary result (of type String) and set the difference delta to resolved.

Thus, as can be seen in FIG. 6, files, such as XML files containing metadata, are represented in a tree structure, which makes the semantical structure of the file clear to the user. The tree structure provides an abstract view to the user and offers the user a better view of the metadata that has changed and the means by which the metadata has changed. By displaying meta data differences in an abstract and graphical way, a user does not need to read the files directly to determine the differences. Now differences between the content of files can be shown as markings (e.g., decorators, shapes and links) in the trees and between trees.

Also, with the framework described in FIG. 6, the various types of difference deltas can be depicted. For example, if a model object is deleted in the left conflict viewer, then it is not existing in that conflict viewer any more, but that same model object is still existing in the right conflict viewer, so it is framed to reflect this condition. However, if the model object is changed in the left conflict viewer, it and the same model in the right conflict viewer are decorated to reflect this condition. As another example, if a property value in a model object has been changed in the left conflict viewer then this model object together with the corresponding one on in the right conflict viewer is framed and both are connected via a link. As yet another example, if a model object in the left conflict viewer has been exchanged by another one of a different type, then the model object together with the corresponding one in the right conflict viewer is framed and both are connected via a link. Thus, in addition to a clearer and more intuitive display of the metadata of a file, even the differences between the data trees of different files can be depicted in a way that is understandable to users of the semantical knowledge of the underlying model that is used to calculate the differences. Each difference (difference delta) can be explained by a piece of text in an additional view in order to make the differences even clearer and to explain to the user who has performed this change, i.e., whether the application provider changed the application or the customer changed it.

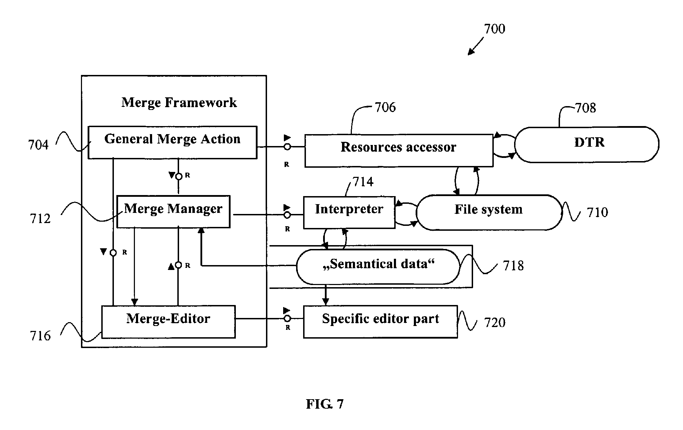

FIG. 7 is a block diagram of the architecture of a merge tool framework 700 that can be used to merge files or file sets containing metadata. When an instance of the merge tool 700 starts, e.g., by user interface triggered actions, the general merge action module 704 initializes the resources accessor module 706, the merge manager module 712 and the merge-editor module 716. The resources accessor module 706 retrieves all necessary resources (e.g., the various versions of the file or file sets) from the DTR 708 versioning system and stores them to the file system 710 (e.g., a local hard disk) as a starting point for the merge process. This process of retrieving the resources and storing the resources may be referred to as a download. The merge manager module 712 manages the merge process and causes the interpreter module 714 to read from the file system 710 the content of a files or file sets after the resources accessor module 706 writes to the file system 710. The interpreter module 716 builds up the semantical data 718 of the resources (files or file sets), e.g., the meta data structures (model objects) read from the file system 710. The merge-editor 716 displays the semantical data 718 of the resources (e.g., in the manner described in FIG. 6) and executes merge operations. Each time an atomic merge operation is performed, i.e., resolution of a difference delta corresponding to a particular model object, the merge editor 716 or the specific editor part module 720 executes the operation. In response to a merge operation, the interpreter module 714 via the merge editor 716 and the merge manager 721 changes the semantical data 718 and writes the changed semantical data 718 back to the file or file sets in the file system 710, which may be referred to as the merged files or file sets. The resources accessor module 706 then retrieves the merged files or file sets from the file system 710 and checks (or stores) them in to the DTR 708 versioning system. This process may be referred to as an upload.

Various implementations of the subject matter described herein may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the term "information carrier" comprises a "machine-readable medium" that includes any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal, as well as a propagated machine-readable signal. The term "machine-readable signal" refers to any signal used to provide machine instructions and/or data to a programmable processor.

To provide for interaction with a user, the subject matter described herein may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

Although a few variations have been described in detail above, other modifications are possible. For example, steps in a flow diagram may be replaced with other steps, additional steps may be added, some steps optionally may be removed, and/or steps may be performed in a different order, or in parallel, relative to the order depicted. Accordingly, other embodiments are within the scope of the following claims.

## Claims

1. A computer program product, embodied on computer readable-material, the computer program product including executable instructions causing a data processing apparatus to:
obtain a plurality of model objects to represent a plurality of metadata of a selected file;
associate each obtained model object with a corresponding one of a plurality of tree nodes; and
display the associated tree nodes in a tree structure.

2. A computer program product as in claim 1, wherein the displayed tree nodes are configured to represent the plurality of metadata.

3. A computer program product as in claim 1 or 2, wherein the displayed tree nodes are configured to represent a relation between obtained model objects.

4. A computer program product as in any one of the preceding claims, wherein the instruction to obtain a plurality of model objects to represent the plurality of metadata comprises instructions causing the data processing apparatus to:
obtain a plurality of model objects; and
assign a plurality of attributes to each obtained model object, wherein each attribute comprises a property and a value.

5. A computer program product as in any one of the preceding claims, wherein at least one of the displayed tree nodes is collapsible or expandable.

6. A computer program products as in any one of the preceding claims, further comprising executable instructions causing a data processing apparatus to:
select one of the displayed tree nodes; and
display the plurality of attributes and associated values assigned to the model object associated with the selected tree node.

7. A computer program product, embodied on computer readable-material, the computer program product including executable instructions causing a data processing apparatus to:
obtain a first model of a first file, a second model of a second file and a third model of a third file;
determine one or more differences between the first model and the third model;
determine one or more differences between the second model and the third model; and
display the first model, the second model and at least one determined difference.

8. A computer program product as in claim 7, wherein the instruction to display the first model, the second model and at least one determined difference comprises instructions causing the data processing apparatus to:
display a first tree containing a plurality of hierarchically arranged model objects of the first model;
display a second tree containing a plurality of hierarchically arranged model objects of the second model; and
display at least one determined difference, wherein the displayed difference being graphically visualized by one of a group of a decorator, a shape and a link.

9. A computer program product as in claim 8, wherein instructions to display a first tree containing a plurality of hierarchically arranged model objects of the first model comprises instructions causing the data processing apparatus to:
obtain a plurality of model objects of the first model to represent a plurality of metadata of the first file;
associate each obtained model object with a corresponding one of a plurality of tree nodes;
arrange the associated tree nodes corresponding to a structure of the plurality of metadata of the first file; and
display the arranged tree nodes in a tree structure.

10. A computer program product as in claim 8 or 9, wherein the displayed tree nodes are configured to represent the plurality of metadata.

11. A computer program product as in claim 8, 9 or 10, wherein the instruction to obtain a plurality of model objects of the first model to represent a plurality of metadata of the first file comprises instructions causing the data processing apparatus to:
obtain a plurality of model objects; and
assign a plurality of attributes to each obtained model object, wherein each attribute comprises a property and a value.

12. A computer program product as in claim 11, wherein the displayed difference is located in a conflict viewer or a properties area.

13. A computer program product, embodied on computer readable-material, the computer program product including executable instructions causing a data processing apparatus to:
identify a first model of a first file, a second model of a second file and a third model of a third file;
determine one or more differences between the first model and the third model;
determine one or more differences between the second model and the third model; and
store a selection of the first model or the second model based each determined difference.

14. A computer program products as in claim 13, further comprising executable instructions causing a data processing apparatus to display the first model, the second model and at least one determined difference.

15. A computer program product as in claim 13 or 14, wherein the instruction to store a selection of the first model or the second model based on each determined difference comprises instructions causing the data processing apparatus to:
receive a selection of the first model based on the displayed difference; and
store the first model.

16. A computer program product as in claim 13, 14 or 15, wherein the instruction to store a selection of the first model or the second model based on each determined difference comprises instructions causing the data processing apparatus to:
receive a selection of the second model based on the displayed difference;
change the first model based on the displayed difference; and
store the changed first model.

17. A computer program product as in any one of the preceding claims 13 to 16, wherein the instruction to display the first model, the second model and at least one determined difference comprises instructions causing the data processing apparatus to:
display a first tree containing a plurality of hierarchically arranged model objects of the first model;
display a second tree containing a plurality of hierarchically arranged model objects of the second model; and
display at least one determined difference, wherein the displayed difference being graphically visualized by one of a group of a decorator, a shape and a link.

18. A computer program product as in claim 17, wherein the instruction to store a selection of the first model or the second model based on each determined difference comprises instructions causing the data processing apparatus to:
receive a selection of the second model based on the displayed difference;
change the first model based on the displayed difference; and
store the changed first model.

19. A computer program product as in claim 17 or 18, wherein instructions to display a first tree containing a plurality of hierarchically arranged model objects of the first model comprises instructions causing the data processing apparatus to:
obtain a plurality of model objects of the first model to represent a plurality of metadata of the first file;
associate each obtained model object with a corresponding one of a plurality of tree nodes;
arrange the associated tree nodes corresponding to a structure of the plurality of metadata of the first file; and
display the arranged tree nodes.

20. A computer program product as in claim 18 or 19, wherein the instruction to obtain a plurality of model objects of the first model to represent a plurality of metadata of the first file comprises instructions causing the data processing apparatus to:
obtain a plurality of model objects; and
assign a plurality of attributes to each obtained model object, wherein each attribute comprises a property and a value.
